# EUROPÄISCHE PATENTSCHRIFT

(11) **EP 3 515 759 B1**
(45) Veröffentlichungstag und Bekanntmachung des Hinweises auf die Patenterteilung: **17.12.2025**
(21) Anmeldenummer: 17771429.2
(22) Anmeldetag: 20.09.2017
(51) Int. Cl.: G03H 1/00, G03H 1/22, B60Q 1/26, F21S 43/14, F21S 43/20

(54) **LEUCHTEINRICHTUNG FÜR FAHRZEUGE**
LIGHTING DEVICE FOR VEHICLES
DISPOSITIF D'ÉCLAIRAGE POUR VÉHICULES

(30) Priorität: 23.09.2016 DE 102016117969
(43) Veröffentlichungstag der Anmeldung: 31.07.2019
(73) Patentinhaber: Carl Zeiss Jena GmbH, 07745 Jena (DE)
(72) Erfinder: ERLER, Christoph, 07745 Jena (DE)
(74) Vertreter: Kraus & Lederer PartGmbB
(86) Internationale Anmeldenummer: PCT/EP2017/073797
(87) Internationale Veröffentlichungsnummer: WO 2018/054985

(56) Entgegenhaltungen:
- WO-A1-2008/132678
- WO-A1-2014/106584
- CN-A- 1 784 629
- DE-A1- 102014 204 535
- US-A- 5 963 345
- US-A1- 2015 232 018

## Beschreibung

Die vorliegende Anmeldung betrifft eine Leuchteinrichtung für Fahrzeuge wie beispielsweise Kraftfahrzeuge. Insbesondere betrifft die vorliegende Anmeldung Rückleuchten für Fahrzeuge, ist jedoch nicht hierauf begrenzt.

Beleuchtungsvorrichtungen werden in Fahrzeugen benutzt, um zum einen eine Umgebung des Fahrzeugs zu beleuchten, um einem Fahrer des Fahrzeugs auch in Dunkelheit Sicht zu ermöglichen, und zum anderen, um andere Personen oder Fahrzeuge auf das mit der Leuchteinrichtung ausgerüstete Fahrzeug aufmerksam zu machen. Beispiele für derartige Beleuchtungsvorrichtungen sind Frontscheinwerfer in Kraftfahrzeugen, Rückleuchten oder Blinker.

Neben ihrer technischen Funktion werden derartige Beleuchtungsvorrichtungen zunehmend auch dafür genutzt, beispielsweise Fahrzeugen einer bestimmten Marke ein unverwechselbares Aussehen zu geben. Dabei wird hauptsächlich die äußere Form derartiger Beleuchtungsvorrichtungen als Gestaltungsmerkmal genutzt. Zunehmend wird auch die Leuchtsignatur derartiger Leuchteinrichtungen charakteristisch ausgestaltet. Beispielsweise werden charakteristische Leuchtsignaturen bei Fahrzeugrückleuchten eingesetzt. Dabei existieren gleichzeitig immer schärfer definierte Randbedingungen bezüglich Bauraum und Anordnung am Fahrzeug, beispielsweise, um eine Laderaumbreite maximal ausnutzen zu können. Um die in den genannten Beispielen erwähnten Einschränkungen zu umgehen bzw. um die vom Gesetzgeber und die vom Fahrzeugdesign geforderten Randbedingungen zu erfüllen, sind häufig stark angepasste optische Konzepte notwendig. Klassischerweise werden hier Spiegel, Prismen und makroskopische Streustrukturen eingesetzt, um gewünschte Leuchteinrichtungen zu realisieren.

Beispiele für Leuchteinrichtungen, welche besondere optische Effekte mittels Leuchtdioden erzielen, sind beispielsweise aus der FR 2 995 978, der US 9,091,407 B1, der EP 07 020 676 A1, der EP 2 336 632 A1, der WO 2011/113937 A1, der US 2013/0010487 A1, oder der US 2014/0085916 A1 bekannt. Aus derartigen Druckschriften bekannte Leuchtdiodenrückleuchten eines Fahrzeugs zeigen einen 3D-Effekt durch Mehrfachreflexion von einem Spiegelsystem, welches einen teildurchlässigen Spiegel und einen Spiegel mit im Wesentlichen 100% Refraktion umfasst. Eine verwendete Lichtquelle umfasst eine Zusammenstellung verschiedener Leuchtdioden in einem kompakten Gehäuse. Die Form dieses Gehäuses gibt eine optische Form vor, die mehrfach reflektiert wird.

Die DE 10 2014 204 535 A1 offenbart eine Rückleuchte für ein Kraftfahrzeug, bei dem eine Rücklichtfunktion mittels eines Hologramms realisiert wird. Dabei dient ein von dem Hologramm erzeugtes Bild insbesondere als zusätzlicher Warnhinweis, und mittels einer weiteren Lichtquelle kann eine normale Lichtfunktion realisiert werden. Die Warnfunktion ist für Verkehrsteilnehmer außerhalb einer Sichtachse nicht sichtbar. Zudem offenbart diese Druckschrift, mehrere Hologramme in einer Schicht zu integrieren und diese mehreren Hologramme mit mehreren Lichtquellen anzusteuern, um holografische Bilder in verschiedenen Entfernungen zu erzeugen.

Die WO 2014/106584 A1 offenbart ebenfalls eine Leuchteinrichtung für ein Fahrzeug, welche mittels eines Hologramms implementiert ist.

Die US 5 963 345 A offenbart eine Leuchteinrichtung für ein Fahrzeug, bei der mittels Hologrammen mehrere Einzelbilder mit gleicher räumlicher Ausrichtungen und unterschiedlichen Formen erzeugt werden.

Die US 2015/232018 A1 offenbart eine weitere derartige Leuchteinrichtung, bei der Bilder, die aus verschiedenen Bereichen sichtbar sind, nacheinander erzeugt werden.

Bei dieser herkömmlichen Herangehensweise ist jedoch der Gestaltungsspielraum begrenzt, und die verwendeten Spiegel und Lichtquellenanordnungen benötigen einen entsprechenden Bauraum.

Für das neue Gebiet autonom fahrender Fahrzeuge hat die Rückleuchte nicht nur eine Leuchtenfunktion, sondern es wird eine Möglichkeit gesucht, für die Mensch-Maschinen-Interaktion dem klassischen Rücklicht eine kommunikative Rolle zuzuweisen. Beispielsweise kann die Rückleuchte einem Passanten zu verstehen geben, dass er passieren kann. Einem hinterherfahrenden Fahrzeug kann signalisiert werden, falls es zu nahe auffährt.

Um dies zu verwirklichen, muss die Rückleuchte neben der klassischen Leuchtenfunktion eine Projektionsmöglichkeit mit variablem Inhalt beinhalten, der vorzugsweise nur bei Bedarf zugeschaltet wird.

Es ist daher eine Aufgabe der vorliegenden Anmeldung, diesbezüglich verbesserte Möglichkeiten bereitzustellen.

Hierzu wird eine Leuchteinrichtung nach Anspruch 1 bereitgestellt. Die Unteransprüche definieren weitere Ausführungsformen.

Erfindungsgemäß wird eine Leuchteinrichtung für ein Fahrzeug, insbesondere ein Kraftfahrzeug, bereitgestellt, umfassend ein Hologramm, und eine Lichtquelle zum Beleuchten des Hologramms, sodass durch das Hologramm ein Bild zu erzeugt wird.

Durch die Verwendung eines Hologramms können verschiedene Muster als Bilder auch außerhalb der physikalischen Begrenzung der Leuchteinrichtung erzeugt werden und somit charakteristische Leuchtsignaturen geschaffen werden.

Das Bild kann ein reelles Bild sein. Das reelle Bild dient dann gleichsam als virtuelle Lichtquelle der Leuchteinrichtung mit einer gewünschten Form.

Das Bild kann eine Abmessung kleiner als eine Abmessung des Hologramms aufweisen. Hierdurch kann ein räumlicher Effekt erreicht werden.

Das Hologramm kann eingerichtet sein, das Bild außerhalb physikalischer Grenzen der Leuchteinrichtung zu erzeugen. Hierdurch sind besondere 3D-Effekte möglich.

Ein Abstand zwischen der Leuchteinrichtung und dem Bild kann dabei zwischen 50 und 200 mm liegen, z.B. ungefähr 100 mm betragen.

Das Hologramm umfasst in einer ersten Alternative eine Vielzahl von gleichzeitig erzeugten Einzelhologrammen, sodass das Bild eine Vielzahl von Einzelbildern umfassen, wobei die Einzelbilder verschiedene räumliche Ausrichtungen und gleiche Formen aufweisen.

Durch die Verwendung mehrerer Einzelhologramme können Erfordernisse hinsichtlich eines Winkelbereichs, in dem die Leuchteinrichtung zu sehen ist, erfüllt werden.

Die Einzelbilder können dabei in einer Ausführungsform, welche nicht der beanspruchten Erfindung entspricht , verschiedene Formen aufweisen, sodass die Leuchteinrichtung bei verschiedenen Betrachtungsrichtungen unterschiedlich erscheint.

Das Hologramm ist in einer zweiten Alternative eingerichtet, das Bild mit einer gekrümmten Form zu erzeugen. Die Form kann dabei einem Ausschnitt eines Zylindermantels oder einem Ausschnitt einer Kugeloberfläche entsprechen.

Auch durch die Bereitstellung einer gekrümmten Form können Erfordernisse hinsichtlich Sichtbarkeit erfüllt werden. Die Vielzahl von Einzelhologrammen oder die gekrümmte Form ist eingerichtet, eine Betrachtbarkeit des Bildes in einer Ebene aus einem Winkelbereich größer als 45°, insbesondere größer als 90°, zu ermöglichen, z.B. um Normen für Fahrzeugleuchten zu erfüllen. Die Ebene kann im eingebauten Zustand der Leuchteinrichtung in einem Fahrzeug eine Ebene parallel zum Boden sein. Hier wird von Normen häufig ein größerer Sichtbarkeitsbereich gefordert.

Das Hologramm kann eine Farbfilterfunktion für die Lichtquelle aufweisen. Hierdurch können Anforderungen hinsichtlich Schmalbandigkeit der Lichtquelle erfüllt werden.

Die Leuchteinrichtung kann eine Rückleuchte für ein Kraftfahrzeug sein.

Auf diese Weise können Rückleuchten mit gewünschten Designs erstellt werden.

Die Lichtquelle kann eine Leuchtdiode umfassen. So kann eine geeignete Lichtquelle kostengünstig bereitgestellt werden.

Die Vorrichtung kann zudem einen Bildgeber umfassen, der beispielsweise Licht von der Lichtquelle moduliert, um gewünschte Bildinhalte zu erzeugen. Zusätzlich oder alternativ kann das Hologramm mehrere Einzelhologramme entsprechend verschiedenen Bildinhalten umfassen. Auf diese Weise kann eine Hinweisfunktion insbesondere für autonom fahrende Fahrzeige implementiert werden. Dies kann auch zusätzlich zu einer herkömmlichen Leuchtenfunktion bereitgestellt werden. Hier wirkt das Hologramm dann gleichsam als Projektionsschirm für die Bildinhalte, die vom Bildgeber vorgegeben werden.

Der Einsatz von Hologrammen, insbesondere Volumenhologrammen, als Projektionsschirm ist hierbei vorteilhaft, da diese winkel- und wellenlängenselektiven transparenten Elemente im bestehenden Bauraum einer Rückleuchte verbaut werden können und nur bei Beleuchtung aus einem bestimmten Winkel mit einer bestimmten Wellenlänge ihre Wirkung zeigen. Ansonsten agieren Sie als passives transparentes Zusatzelement in der Rückleuchte.

Das Hologramm kann einen Hologrammstapel mit mehreren gestapelten Einzelhologrammen umfassend mindestens ein Reflexionshologramm umfassen, wobei der Hologrammstapel eingerichtet ist, das Bild auf einer der Lichtquelle abgewandten Seite des Hologrammstapels zu erzeugen. Hierdurch können Vorteile von Reflexionshologrammen hinsichtlich Winkelakzeptanz und Wellenlängenselektivität mit einer Anordnung in Transmission, die für einen Einbau in Fahrzeuge vorteilhaft sein kann, kombiniert werden.

Die Erfindung wird nachfolgend anhand von Ausführungsbeispielen unter Bezugnahme auf die beigefügten Zeichnungen näher erläutert. Es zeigen:
Fig. 1 ein Diagramm zur Veranschaulichung einer Strahlformung mittels eines Transmissionshologramms,
Fig. 2 ein Diagramm zur Veranschaulichung einer Strahlformung mit einem Reflexionshologramm,
Fig. 3 eine schematische Darstellung einer Rückleuchte eines Fahrzeugs gemäß einem Ausführungsbeispiel,
Fig. 4A und 4B Darstellungen zur Veranschaulichung von Anforderungen an die geometrische Sichtbarkeit von Rückleuchten,
Fig. 5 eine schematische Darstellung einer Leuchteinrichtung gemäß einem Ausführungsbeispiel,
Fig. 6 eine Darstellung zur Veranschaulichung von Sichtbarkeitscharakteristiken,
Fig. 7 eine schematische Darstellung einer Leuchteinrichtung gemäß einem weiteren Ausführungsbeispiel,
Fig. 8 eine schematische Darstellung einer Leuchteinrichtung gemäß einem weiteren Ausführungsbeispiel,
Fig. 9 eine schematische Darstellung einer Leuchteinrichtung gemäß einem weiteren Ausführungsbeispiel,
Fig. 10-12 Darstellungen zur Veranschaulichung der Herstellung von Volumenhologrammen für verschiedene Ausführungsbeispiele,
Fig. 13-15 Darstellungen zur Veranschaulichung des Einsatzes der Volumenhologramme der Fig. 10-12,
Fig. 16 eine Darstellung einer Leuchteinrichtung gemäß einem weiteren Ausführungsbeispiel, und
Fig. 17 ein Implementierungsbeispiel der Leuchteinrichtung der Fig. 16.

Im Folgenden werden verschiedene Ausführungsbeispiele detailliert erläutert. Diese Ausführungsbeispiele dienen lediglich der Veranschaulichung und sind nicht als einschränkend auszulegen. Insbesondere ist eine Beschreibung eines Ausführungsbeispiels mit verschiedenen Merkmalen und Details nicht dahingehend zu interpretieren, dass alle diese Merkmale oder Details zur Implementierung notwendig sind. Beispielsweise können bei anderen Ausführungsbeispielen Volumenhologramme auch in anderer Weise angeordnet sein als dargestellt, und/oder Transmissionshologramme können durch Reflexionshologramme ersetzt sein oder umgekehrt.

In den Figuren tragen zur Vermeidung von Wiederholungen gleiche oder einander entsprechende Elemente die gleichen Bezugszeichen und werden nicht mehrmals erläutert.

Bei Ausführungsbeispielen werden Volumenhologramme zur Strahlformung und/oder Wellenlängenfilterung von Licht einer Lichtquelle, beispielsweise einer Leuchtdiodenlichtquelle, verwendet. Hierdurch können Leuchteinrichtungen wie beispielsweise Rückleuchten für Fahrzeuge, insbesondere Kraftfahrzeuge, realisiert werden, welche neuartige optische Effekte bieten. Insbesondere können virtuelle oder reelle Bilder außerhalb einer physikalischen Begrenzung einer Leuchteinrichtung wie einer Rückleuchte erzeugt werden.

Die in der vorliegenden Anmeldung diskutierten Ausführungsbeispiele umfassen ein oder mehrere Volumenhologramme, im Folgenden auch einfach als Hologramme oder holografische Gitter bezeichnet. Volumenhologramme arbeiten im Allgemeinen wellenlängen- und winkelselektiv. Diese Selektivität lässt sich durch das Design des Hologramms gezielt einstellen, insbesondere über die Dicke des Volumenhologramms und den Designwinkel, d.h. den Winkel, unter dem bei der Herstellung des Hologramms eine Belichtung erfolgt. Diese Eigenschaften lassen sich nutzen, um eine Abstrahlcharakteristik einer Lichtquelle, beispielsweise einer Leuchtdiode oder einer Leuchtdiodenanordnung, innerhalb weiter Grenzen im Wesentlichen beliebig zu gestalten. Durch die Wellenlängenselektivität und Winkelselektivität lassen sich dabei Strahlformung und Farbfilterung in einem Hologramm zusammenfassen.

Unter einem Volumenhologramm ist dabei allgemein ein Hologramm zu verstehen, welches durch Belichtung eines lichtempfindlichen Volumenmaterials erzeugt wird. Derartige Volumenhologramme werden auch als holografische Gitter bezeichnet.

Volumenhologramme sind Phasengitter, d.h. in dem holographischen Medium wurde gezielt (z.B. durch holographische Belichtung) der Brechungsindex lokal geändert. Dadurch ändert sich die Phase einer ankommenden Welle. Die Struktur dieser lokalen Phasenänderung bewirkt eine Beugung einer ankommenden Welle in einer bestimmten Richtung. Unter einer Restitution eines Hologramms ist eine Bestrahlung eines Hologramms mit Licht, um das Hologramm zu "aktivieren", z.B. in dem Hologramm enthaltene Bildinformationen wiederzugeben, zu verstehen.

Eine holographische Funktion eines Hologramms bestimmt, wie das Hologramm einfallendes Licht modifiziert, um z.B. Bildinhalte wiederzugeben.

Prinzipiell lässt sich mittels derartiger Hologramme jede beliebige optische Funktion realisieren. Der Freiheitsgrad des optischen Designs ist hier bei Ausführungsbeispielen deutlich höher als bei herkömmlichen diffraktiven und refraktiven Lösungen (beispielsweise mittels Linsen, Spiegeln und dergleichen). Zudem lassen sich bei Volumenhologrammen Störordnungen und Geistergitter gezielt unterdrücken.

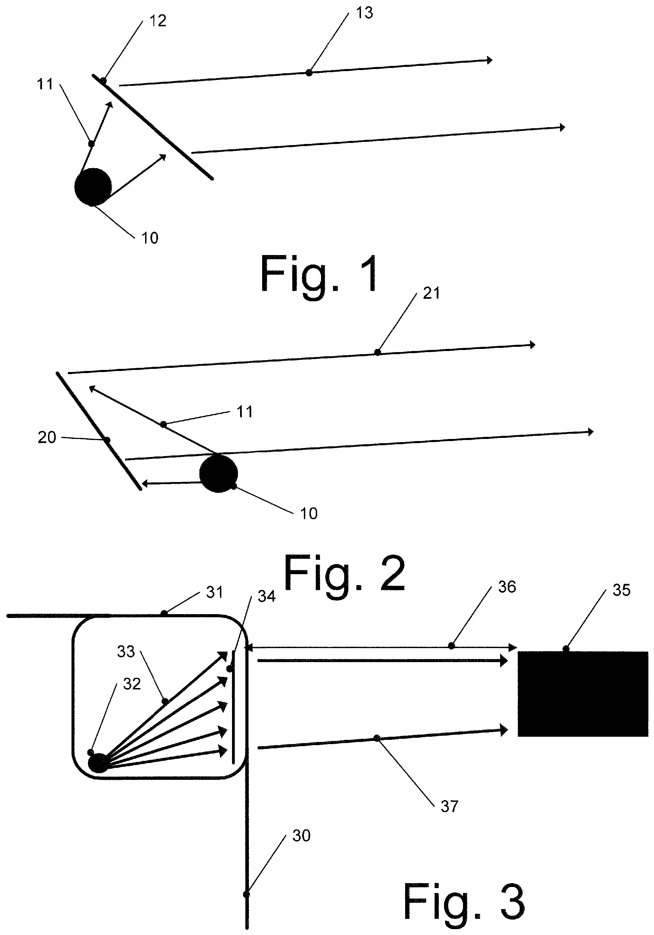

Für eine derartige Strahlformung und/oder Filterfunktion lassen sich sowohl Transmissions- als auch Reflexionshologramme, insbesondere holografische Gitter, verwenden. Dies wird nunmehr unter Bezugnahme auf die Figuren 1 und 2 erläutert.

Fig. 1 zeigt dabei ein Beispiel, in dem ein Transmissionshologramm 12, insbesondere ein Transmissionsgitter, welches als Volumenhologramm implementiert ist, mit Licht 11 einer Lichtquelle 10 beleuchtet wird. Die Lichtquelle 10 kann insbesondere eine Leuchtdiode oder eine Leuchtdiodenanordnung sein. Im Falle einer Leuchtdiodenanordnung können sämtliche Leuchtdioden von gleicher Bauart sein und insbesondere ein nominell gleiches Emissionsspektrum aufweisen. Für eine Anwendung für Rückleuchten können insbesondere rote Leuchtdioden verwendet werden. Bei anderen Ausführungsbeispielen können auch verschiedenfarbige Leuchtdioden mit entsprechend verschiedenen angepassten Hologrammen verwendet werden.

Üblicherweise finden bei der Restitution von Transmissionshologrammen (z.B. bei der Wiedergabe von in derartigen Hologrammen aufgezeichneten Bildern) nur kohärente Lichtquellen ihren Einsatz. Soll ein scharfes Bild von dem Transmissionshologramm erzeugt werden und trotzdem eine breitbandige Leuchtdiode als Lichtquelle 10 Verwendung finden, kann durch gezielte Verwendung von Farbfiltern (z.B. Interferenzfilter, bzw. volumenholografische Wellenlängenfilter) der Wellenlängenbereich eingeschränkt werden.

Durch das Hologramm 12 wird das von der Lichtquelle 10 ausgehende Licht 11 zu einem Strahl 13 geformt, welche hinsichtlich Wellenlänge und Winkelverteilung gewünschte Eigenschaften aufweist. Wie später erläutert werden wird, können insbesondere Bilder der Lichtquelle in einer gewünschten Form bereitgestellt werden, um so gleichsam virtuelle Lichtquellen im Raum zu schaffen.

Die Fig. 2 zeigt eine entsprechende Anordnung für ein Reflexionshologramm 20, insbesondere ein Reflexionsgitter. Dieses wird wiederum mit Licht 11 von der Lichtquelle 10, welche wie bereits für Fig. 1 erläutert aufgebaut sein kann, bestrahlt. So wird ein geformter Strahl 21 gebildet, welcher hinsichtlich Winkelverteilung und Wellenlänge gewünschter Eigenschaften aufweisen kann, die wiederum durch das Reflexionshologramm 20 bestimmt werden.

Derartige Hologramme können in für sich genommen bekannter Weise hergestellt werden, indem ein lichtempfindliches Material mit kohärentem Licht belichtet wird und entsprechend entwickelt wird. Weitere Exemplare eines derartigen Hologramms können dann beispielsweise durch optische Kontaktkopie hergestellt werden. Zur Belichtung kann insbesondere eine erste kohärente Lichtquelle am Ort der Lichtquelle (Lichtquelle 10 in den Figuren 1 und 2) angeordnet werden, und eine weitere Lichtquelle kann an einem Ort eines reellen Bildes, welches durch die Strahlen 13 bzw. 21 erzeugt wird, angeordnet werden.

Die Art des verwendeten Hologramms kann je nach Anwendung gewählt werden. Insbesondere sind Transmissionshologramme üblicherweise für monochromatische Quellen, insbesondere Laserlichtquellen, ausgelegt. Da jedoch beispielsweise aus Kostengründen Leuchtdioden als Lichtquellen bevorzugt sind, kann, falls die Leuchtdioden nicht schmalbandig genug sind, eine Farbfilterung vorgenommen werden, was ebenfalls mittels eines Volumenhologramms geschehen kann. Ein derartiges Volumenhologramm, welches als Farbfilter dient, kann auch in das Hologramm 34 der Fig. 3 integriert sein, sodass das Hologramm 34 eine Farbfilterfunktion und Strahlformungsfunktion bereitstellt.

Bei Reflexionshologrammen ist es hingegen möglich, das Design durch entsprechende Dicke des Hologramms so zu wählen, dass sie als Weißlichtreflexionshologramme wirken, d.h. sie ihre "Abspielwellenlänge" aus einem angebotenen Spektrum selbst aussuchen.

Als Beispiel für eine Leuchteinrichtung für ein Kraftfahrzeug zeigt Fig. 3 eine Rückleuchte 31 gemäß einem Ausführungsbeispiel. Die vorliegende Anmeldung ist jedoch nicht auf Rückleuchten beschränkt, und andere Leuchteinrichtungen, beispielsweise Blinker oder Bremsleuchten, können ebenso unter Benutzung von Volumenhologrammen implementiert sein.

Die Rückleuchte 31 der Fig. 3 ist in dem dargestellten Beispiel an einer Ecke eines schematisch dargestellten Fahrzeugs 30 angeordnet.

Die Rückleuchte 31 umfasst eine Lichtquelle 32, welche ein Hologramm 34 mit Lichtstrahlen 33 beleuchtet. In dem dargestellten Ausführungsbeispiel ist das Hologramm 34 ein Transmissionshologramm, welches in einer Off-Axis-Anordnung relativ zu der Lichtquelle 32 angeordnet ist, d.h. die Lichtquelle 32 befindet sich nicht auf einer Symmetrieachse des Hologramms 34. Eine Wellenlänge der Lichtquelle 32 ist dabei bevorzugt möglichst nah an einer Wellenlänge, welche als Referenzwelle beim Aufnehmen des Hologramms 34 benutzt wurde. Bei manchen Ausführungsbeispielen kann zudem ein zusätzliches Volumenhologramm als Strahlformer, beispielsweise zur geeigneten Beleuchtung des Hologramms 34, bereitgestellt werden.

Die Lichtquelle 32 kann beispielsweise eine Leistungsleuchtdiode (Power-LED) sein, insbesondere eine rote Leistungsdiode mit einer Lichtwellenlänge von 617 nm oder 630 nm, ist jedoch nicht hierauf beschränkt. Das Hologramm 34 ist dabei derartig ausgestaltet, dass von dem Hologramm 34 in Antwort auf die Beleuchtung mit dem Licht 33 ausgehende Lichtstrahlen 37 ein reelles Bild 35, im dargestellten Beispiel in Form eines Rechtecks, in einem Abstand 36 von der Rückleuchte 31 bilden. Während in dem dargestellten Beispiel eine Rechteckform als reelles Bild 35 dargestellt ist, können durch entsprechende Ausgestaltung des Hologramms 34 im Wesentlichen beliebige Formen, einschließlich beispielsweise Muster oder Schriftzüge, gebildet werden. Bei Leuchteinrichtungen für Fahrzeuge ist dabei darauf zu achten, dass die entsprechenden Vorschriften für die jeweilige Leuchteinrichtungen eingehalten werden. Das reelle Bild 35 wird dann von einem Betrachter gleichsam als Lichtquelle wahrgenommen. Somit kann mittels eines Volumenhologramms der Eindruck erweckt werden, als würde sich die eigentliche Lichtquelle außerhalb der physikalischen Begrenzung der Rückleuchte 31 befinden, was neuartige optische Effekte ermöglicht.

So kann der Abstand 36 beispielsweise in der Größenordnung 100 mm liegen, ist jedoch nicht hierauf beschränkt. Das Hologramm 34 kann beispielsweise in einem derartigen Fall Abmessungen im Bereich 90x50 mm haben. Diese numerischen Werte sind lediglich als Beispiel zu verstehen und können je nach Implementierung auch anders sein. Zudem kann bei anderen Ausführungsbeispielen statt eines reellen Bildes auch ein virtuelles Bild erzeugt werden.

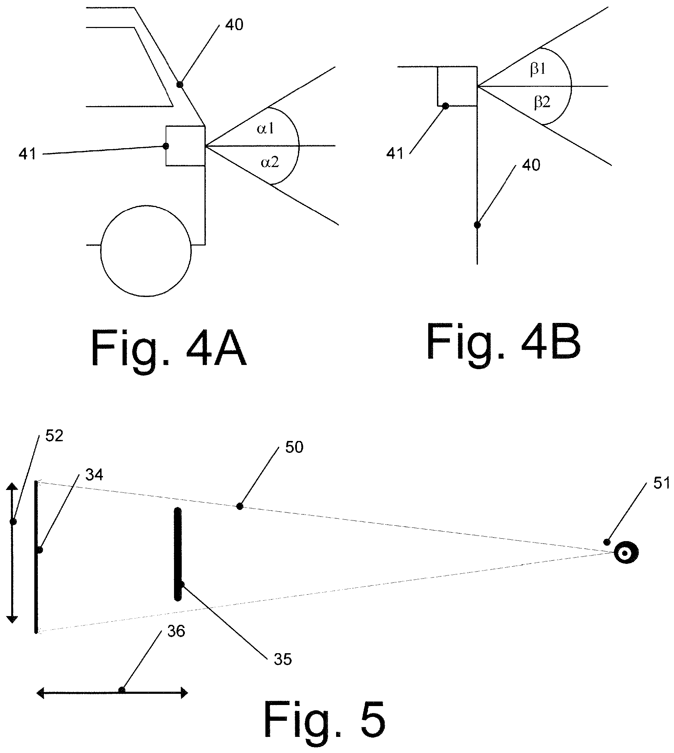

Wie bereits kurz oben angerissen ergeben sich aus verschiedenen Vorschriften Anforderungen an Leuchteinrichtungen für Fahrzeuge. Dies wird nunmehr unter Bezugnahme auf die Fig. 4A und 4B am Beispiel der geometrischen Sichtbarkeit von Rückleuchten erläutert.

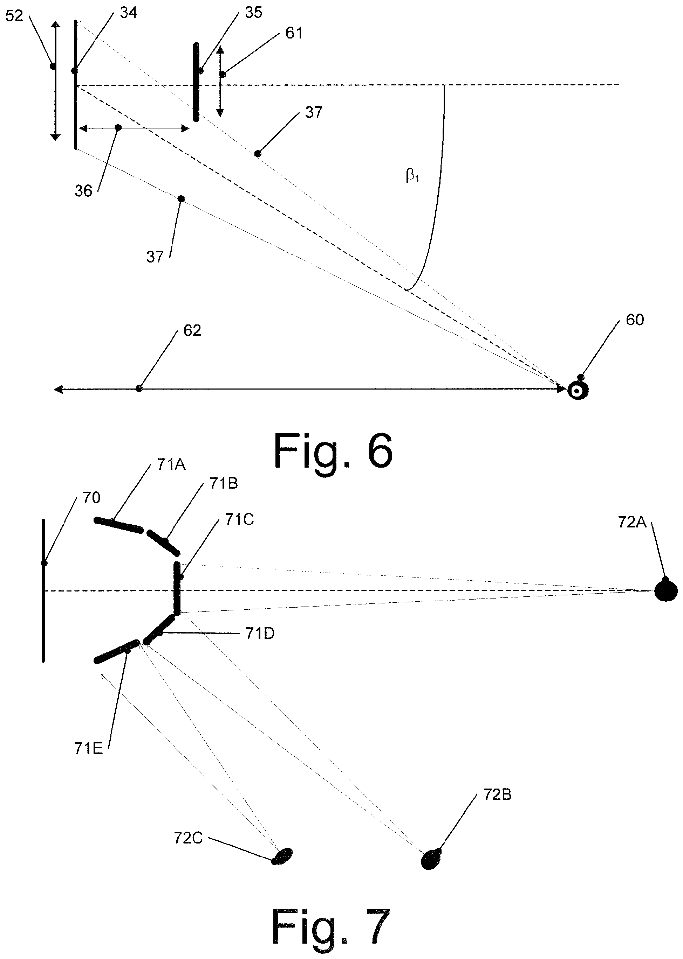

Fig. 4A zeigt eine teilweise Seitenansicht eines Fahrzeugs 40 mit einer Rückleuchte 41, und Fig. 4B zeigt eine schematische Draufsicht auf das Fahrzeug 40 mit der Rückleuchte 41. Winkel α1, α2 in Fig. 4A und β1, β2 in Fig. 4B geben Winkelbereiche an, innerhalb der die Rückleuchte 41 sichtbar sein soll. Nach der Richtlinie ECE R7, Stand 2016, sind zum Beispiel Mindestwerte α1=α2=15° und β1=β2=45°. Im eingebauten Zustand liegen die Winkel β1, β2 daher in einer Ebene parallel zu einem Boden, auf dem das Fahrzeug steht, und die Winkel α1, α2 in einer Ebene senkrecht hierzu. In anderen Ländern können andere Vorschriften gelten. Wie im Folgenden erläutert werden wird, sind durch eine Erzeugung eines reellen Bildes außerhalb der physikalischen Grenzen der Rückleuchte zusätzliche Anforderungen hinsichtlich Positionierung des reellen Bildes zu beachten, um die Anforderungen bezüglich der geometrischen Sichtbarkeit zu erfüllen. Zudem sind, um tatsächlich einen räumlichen Eindruck zu erreichen, zusätzlich bestimmte Anforderungen an Positionierung und Größe des reellen Bildes zu stellen. Dies wird nunmehr unter Bezugnahme auf die Figuren 5 und 6 näher erläutert.

Die Fig. 5 zeigt eine schematische Draufsicht auf eine Leuchteinrichtung, z.B. eine Rückleuchte, gemäß einem Ausführungsbeispiel. In Fig. 5 ist mit 34 ein Hologramm der Leuchteinrichtung dargestellt, beispielsweise entsprechend dem Hologramm 34 der Fig. 3. Mit 35 ist wie in Fig. 3 das reelle Bild bezeichnet. Dabei zeigt die Fig. 5 eine Draufsicht ähnlich der Ansicht der Fig. 4B. Eine Ausdehnung 52 des Hologramms kann wie bereits erwähnt im Bereich 90 mm sein, und der Abstand des reellen Bildes 35 von dem holografischen Element 34 kann beispielsweise 100 mm sein. Diese Abmessungsangaben sind jedoch nur als Beispiel zu verstehen und können je nach Implementierung variieren. Mit dem Bezugszeichen 51 ist in Fig. 5 eine sogenannte Eyebox bezeichnet, aus der die Leuchteinrichtung betrachtet wird. Mit dem Bezugszeichen 50 sind Randstrahlen zur Betrachtung des holografischen Elements 34 bezeichnet. Um einen räumlichen Eindruck zu erzeugen, ist bei Ausführungsbeispielen bevorzugt das reelle Bild 35, d.h. die erzeugte leuchtende Fläche im Raum, kleiner als die Fläche des Hologramms 34 (unter Fläche des Hologramms ist hier der holografisch aktive Anteil der Fläche zu verstehen), da sonst kein räumlicher Eindruck vorhanden ist. Somit ist es bevorzugt, dass bei Ausführungsbeispielen die Abmessung des reellen Bildes im Raum kleiner ist als die Abmessung des Hologramms.

Zudem beeinflusst auch ein geforderter Betrachtungswinkelbereich, wie unter Bezugnahme auf die Figuren 4A und 4B erläutert, die Ausgestaltung des Hologramms. Dies wird nun unter Bezugnahme auf die Fig. 6 erläutert.

In Fig. 6 ist dabei die Situation für eine Eyebox 60 dargestellt, welche unter einem Winkel β1 zu einer Senkrechten auf dem Hologramm 34 angeordnet ist. In anderen Worten zeigt die Fig. 6 die Situation für eine Betrachtung des Hologramms 34 unter einem Winkel β1. Wie unter Bezugnahme auf die Fig. 4B erläutert, ist zum Beispiel nach ECE R7 gefordert, dass β1 bis zu 45° sein kann, wobei die Rückleuchte sichtbar bleiben muss.

Mit 52 ist wiederum die Abmessung des Hologramms 34 bezeichnet, mit 36 der Abstand des reellen Bildes 35 von dem Hologramm 34 und mit 61 die Ausdehnung des reellen Bildes. Wie bereits erwähnt kann die Ausdehnung 52 im Bereich 90 mm liegen und der Abstand 36 im Bereich 100 mm liegen. Die Abmessung 61 des reellen Bildes 35 sollte bevorzugt wie unter Bezugnahme auf Fig. 5 erläutert kleiner als die Abmessung 52 des Hologramms 34 sein und kann beispielsweise 60 mm betragen. Diese Zahlenwerte sind wiederum nur als Beispiel zu verstehen. Mit 62 ist ein Betrachtungsabstand, d.h. ein Abstand der Eyebox 60 zu einer Ebene des Hologramms 34, bezeichnet. Der Betrachtungsabstand 62 ist typischerweise deutlich größer als der Abstand 36 und kann beispielsweise mehr als einen Meter, mehrere zehn Meter oder auch mehrere hundert Meter betragen. Mit 37 sind Randstrahlen von der Eyebox 60 zu dem Hologramm 34 bezeichnet. Es werden dabei nur diejenigen Teile des reellen Bildes 35 wahrgenommen, welche innerhalb der Randstrahlen 37 liegen. In dem Beispiel der Fig. 6 wird somit bereits nur ein relativ kleiner Teil des reellen Bildes 35 gesehen.

Die Anforderungen an den Sichtbarkeitswinkel, im Fall der Fig. 6 β1, beschränken somit den Abstand 36 sowie die Größe des reellen Bildes 35. Wie unschwer aus der Fig. 6 erkennbar ist, ist bei einem kleineren Abstand 36 ein größerer Teil des reellen Bildes 35 innerhalb der Randstrahlen 37, oder es kann umgekehrt ein größerer Winkel β1 gewählt werden und dennoch zumindest ein Teil des reellen Bildes sichtbar bleiben. Auf der anderen Seite ist bei einem größeren reellen Bild 35 ein größerer Teil des reellen Bildes innerhalb der Randstrahlen 37. Somit ist hinsichtlich der Sichtbarkeit ein größeres reelles Bild wünschenswert, während wie unter Bezugnahme auf Fig. 5 erläutert die Abmessung 61 kleiner sein sollte als die Abmessung 52, um einen räumlichen Eindruck hervorzurufen. Zudem wird der räumliche Eindruck bei einem größeren Abstand 36 verstärkt.

Somit ist bei einem einzigen geraden reellen Bild 35 wie in Fig. 6 gezeigt, die Wahl der Abmessung 61 sowie des Abstands 36 stets ein Kompromiss zwischen Designwünschen, insbesondere hervorgerufenen räumlichen Effekt, und Anforderungen hinsichtlich des Sichtbarkeitswinkels. Während der Winkel β1 in Fig. 6 als Beispiel genommen wurde, gelten entsprechende Überlegungen auch für die anderen in Fig. 4A und 4B diskutierten Winkel, d.h. α1, α2 und β2.

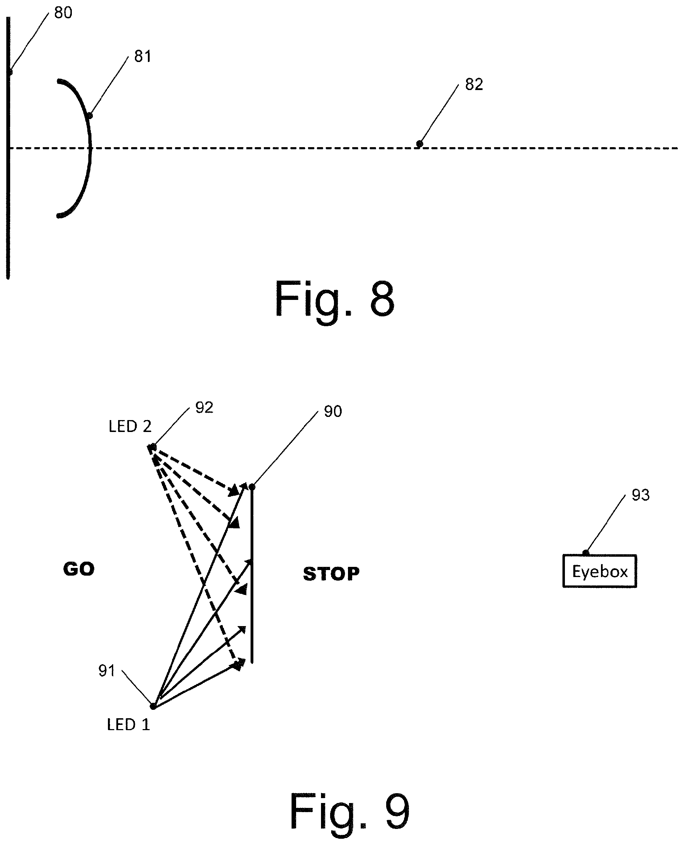

Um diese Einschränkungen zu umgehen, werden nun unter Bezugnahme auf die Figuren 7 und 8 verschiedene mögliche Ansätze bereitgestellt.

Bei dem Ausführungsbeispiel der Fig. 7 umfasst eine Rückleuchte ein Hologramm 70, welches mehrere Einzelhologramme umfasst. Die Einzelhologramme erzeugen mehrere reelle Bilder 71A bis 71E, welche verschiedene Ausrichtungen haben. In anderen Worten werden mehrere reelle Bilder 71A bis 71E für verschiedene Winkelbereiche bereitgestellt. Als Beispiel sind Eyeboxen 72A bis 72E dargestellt, wobei für die Eyebox 72A das reelle Bild 71C, für die Eyebox 72B das reelle Bild 71D und für die Eyebox 72C das reelle Bild 71E betrachtbar ist. Bei Ausführungsbeispielen gemäß der beanspruchten Erfindung weisen die reellen Bilder gleiche Formen auf, beispielsweise Rechteckformen. Bei der Wahl der Formen müssen selbstverständlich die Vorschriften für die entsprechenden Leuchteinrichtungen beachtet werden. Während in der Fig. 7 fünf reelle Bilder 71A bis 71E dargestellt sind, ist dies nur als Beispiel zu verstehen, und die Anzahl kann auch abweichen. Zudem ist grundsätzlich auch in der Richtung senkrecht zur dargestellten Ebene eine Verwendung mehrerer reeller Bilder möglich. Allerdings ist, wie unter Bezugnahme auf Figuren 4A und 4B erläutert, zumindest nach der ECE R7 der Winkelbereich α1, α2 kleiner als der Winkelbereich β1, β2, sodass bei anderen Ausführungsbeispielen zur Abdeckung des Winkelbereichs β1, β2 mehrere reelle Bilder wie in Fig. 7 dargestellt verwendet werden können, während zur Abdeckung des Winkelbereichs α1, α2 in der Richtung senkrecht hierzu ein einziges reelles Bild ausreichend sein kann.

Eine alternative Möglichkeit ist in Fig. 8 dargestellt. Bei der Rückleuchte der Fig. 8 erzeugt ein Hologramm 80 bei Beleuchtung ein reelles Bild 81, welches gekrümmt ist. Mit 82 ist in Fig. 8 eine Mittelachse entsprechend einer geraden Betrachtungsrichtung bezeichnet. Das Bild 81 ist z.B. im Querschnitt halbkreisförmig gekrümmt entsprechend einem Ausschnitt aus einem Zylindermantel, wie in der Ansicht der Fig. 8 dargestellt oder kugelförmig (d.h. entsprechend einem Ausschnitt aus einer Kugel) gekrümmt, um mehrere Raumrichtungen abzudecken. Bei dem reellen Bild 81 wird aus jedem Betrachtungswinkel innerhalb eines Winkelbereichs (beispielsweise β1, β2 aus Fig. 4B) ein Rechteck wahrgenommen. Auch andere Geometrien als eine Halbkreisgeometrie sind grundsätzlich möglich, beispielsweise ein Teil eines Vielecks, was beispielswiese einem reellen Bild entsprechend einer Kombination der reellen Bilder der Fig. 7 entspricht.

Durch die Lösungen der Fig. 7 und 8 können somit größere Winkelbereiche abgedeckt werden.

Insbesondere für die Mensch-Maschinen-Interaktion ist es wünschenswert, einen angezeigten Bildinhalt (z.B. einen Schriftzug, eine Form oder eine Farbe) des Rücklichts unter Verwendung eines Bildgebers oder durch entsprechende Wahl und Ausgestaltung des verwendeten Volumenhologramms variabel zu gestalten. Dies wird nun unter Bezugnahme auf die Figur 9 näher erläutert.

Da Volumenhologramme wellenlängen- und winkelselektiv arbeiten, ist es möglich in dieselbe holographische Schicht eines Hologramms 90 der Fig. 9 mehrere Funktionen zu integrieren, oder das Hologramm 90 durch mehrere Einzelhologramme, die in einem Stack gestapelt sind, zu bilden. Diese verschiedenen Funktionen oder verschiedenen Hologramme können dann wahlweise aktiviert werden. So kann zum Beispiel eine erste feste Funktion abgespielt werden, wenn eine rote 617nm-LED 91 angeschaltet wird. Diese Funktion kann z.B. ein reelles Bild eines Schriftzugs "STOP" enthalten. Reell bedeutet hierbei, dass sich der Schriftzug von einer Eyebox 93 aus gesehen vor dem Hologramm 90 befindet. Wenn der Abstand des reellen Bildes zu dem Hologramm 90 groß genug ist und sich z.B. das Hologramm 90 an der Außenlichtscheibe der Rückleuchte befindet, kann wird der "STOP"-Schriftzug hinter dem Rücklicht in die Luft projiziert.

Zudem kann in dem Ausführungsbeispiel der Fig. 9 eine zweite holographische Funktion restituiert mit einer zweiten Leuchtdiode 92 an einer anderen Stelle als die Leuchtdiode 91 einen Schriftzug "GO" als virtuelles Bild hinter dem Hologramm erzeugen. Durch die verschiedenen Positionen der Leuchtdioden 91, 92 wird das Hologramm 90 unter verschiedenen Winkeln beleuchtet, und durch die Winkelselektivität wird nur die gewünschte Funktion aktiviert. Ebenso kann auch die Wellenlängenselektivität von Volumenhologrammen ausgenutzt werden. Statt "STOP" und "GO" können auch andere Worte, Zeichen, Bilder oder Symbole verwendet werden.

Andere Kombinationen sind möglich. Beispielsweise können bei manchen Ausführungsbeispielen mit vier Leuchtdioden an verschiedenen Positionen (links, rechts, unten, oben in Bezug zum Hologramm) wie bei früheren gif-Animationen 4 verschiedene Symbole als Bewegung zeigen (laufender Passant, öffnender und schließender Kreis, etc. Die optischen Funktionen können Bilder, Schriftzüge, Symbole oder ähnliches enthalten. Sie können alle in einer Ebene (virtuell, reell oder image plane = in der Ebene des Hologramms) oder in mehreren Ebenen dargestellt werden.

Bei manchen Ausführungsbeispielen werden mehrere Farben verwendet. So kann z.B. die Leuchtdiode 91 ein rotes Rücklicht (oder Symbol) darstellen und die Leuchtdiode 92 ein gelbes Blinklicht. Eine Kombination mit mehr Farben (z.B. grünes Ampelsymbol für Fußgänger) ist ebenso möglich.

Zusätzlich zu den Volumenhologrammen mit fest eingeschriebenem Inhalt der je nach Restitution zu Tage tritt, kann auch ein Bildgeber mit variablen Inhalt verwendet werden.

Im Folgenden wird die Erzeugung von Transmissionshologrammen zur Erzeugung virtueller Bilder, reeller Bilder oder Bildern im Unendlichen näher erläutert, wobei als Beispiel für die Verwendung dieser Hologramme dann eine Beleuchtung mit einem Bildgeber zur Erzeugung variabler Bildinhalte erfolgt.

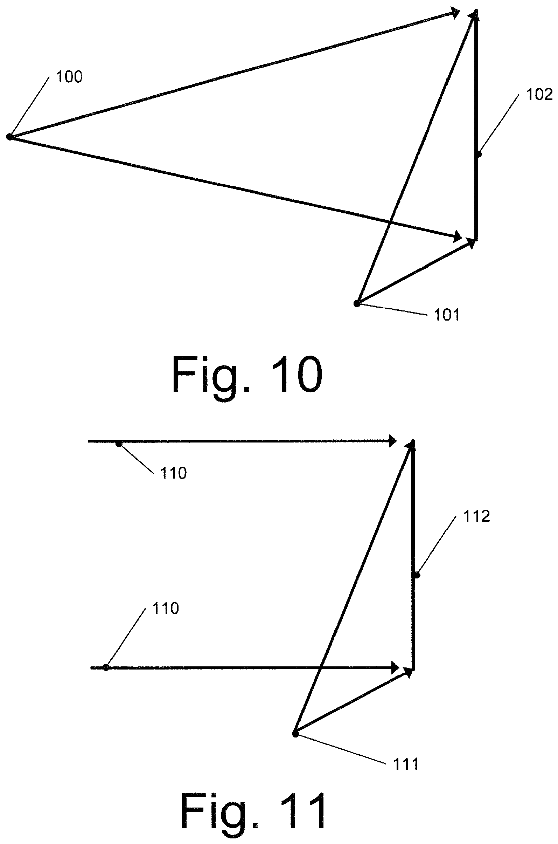

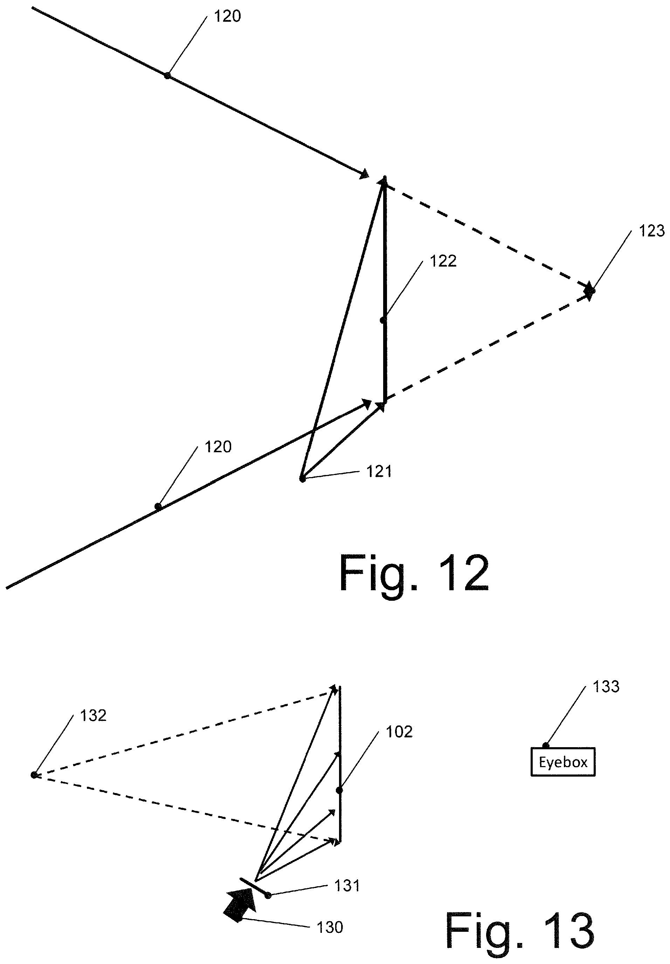

In Fig. 10 ist die Erzeugung eines Transmissionsvolumenhologramms für die Erzeugung eines virtuellen Bildes dargestellt. Hierzu werden 2 sphärische Wellen 100, 101 in einer holografischen Schicht eines herzustellenden Hologramms 102 zur Interferenz gebracht werden. Das so erzeugte Interferenzmuster erzeugt eine lokale Änderung des Brechungsindex in der holografischen Schicht. Die Welle 100 wird als Referenzwelle und die Welle 101 als Signalwelle bezeichnet. Zur Erzeugung eines virtuellen Bildes ist die Referenzwelle 100 divergent. Bei dem entsprechenden Abspielvorgang der in Fig. 13 gezeigt ist, befindet sich an der Ursprungsposition der Signalwelle eine Streuscheibe 131, auf der ein Zwischenbild abgebildet wird. Dieses Zwischenbild wird in dem Beispiel der Fig. 13 von einer Bildgebereinheit 130 erzeugt. So kann z.B. ein kommerziell verfügbarer Laser-Picoprojektor mit der scannenden Laserprojektionstechnik verwendet werden. Ebenfalls möglich sind Bildgeber mit der DLP Mikrospiegelarraytechnik, Lcos-Displays oder Laser-TFT's. Bevorzugt bei allen Varianten ist die Verwendung einer schmalbandigen Quelle (Linienbreite <2nm) und die Abbildung eines Zwischenbildes auf einer Mattscheibe. Diese Mattscheibe kann zur Minimierung des Speckel-Effekts auch eine bewegte Streuscheibe die ebenfalls kommerziell erhältlich ist, sein.

Das auf der Streuscheibe 131 entstehende Bild wird von der als virtuelles Bild 132 in endlicher Entfernung entsprechend dem Ursprung der Referenzwelle 100 zur Betrachtung von einer Eyebox 133 abgebildet.

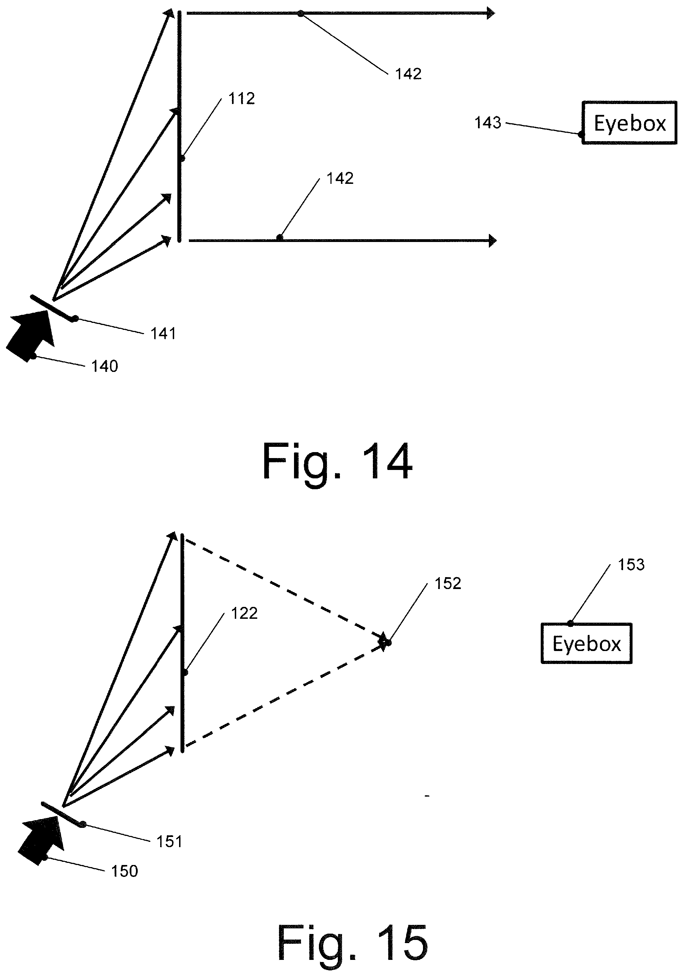

Die Figur 11 zeigt die Erzeugung eines Hologramms 112 zur Erzeugung eines Bildes im Unendlichen. Hier wird eine Signalwelle 111 als Kugelwelle mit einer kollimierten (parallelen) Referenzwelle 110 in einer holografischen Schicht des Hologramms 112 zur Interferenz gebracht. Bei der in Fig. 14 gezeigten Restitution durch Beleuchtung mit einem Bildgeber 140 und einer Streuscheibe 141, welche dem Bildgeber 130 und der Streuscheibe 131 entsprechen, wird entsprechend Lichtstrahlen 142 ein Bild im unendlichen bei Betrachtung von der Eyebox 143 erzeugt.

Die Figur 12 zeigt die Erzeugung eines Hologramms 122 zur Erzeugung eines reellen Bildes. Hier wird eine Signalwelle 111 als Kugelwelle mit einer zu einem Punkt 123 hin konvergierenden Referenzwelle 120 in einer holografischen Schicht des Hologramms 122 zur Interferenz gebracht. Bei der in Fig. 15 gezeigten Restitution durch Beleuchtung mit einem Bildgeber 150 und einer Streuscheibe 151, welche dem Bildgeber 130 und der Streuscheibe 131 entsprechen, wird ein reelles Bild 152 entsprechend der Position des Punktes 123 bei Betrachtung von der Eyebox 153 erzeugt.

Für eine Erzeugung eines 3D-Objektes wird beim manchen Ausführungsbeispielen als Bildgeber (z.B. 130, 140, 150) ein Phasenmodulator verwendet. Die Verwendung von Phasenmodulatoren für die holographische Projektion ist beschrieben in "Simple holographic projection in color; Michal Makowski Vol. 20, No. 22 / OPTICS EXPRESS 25130". Der Phasenmodulator wird als ein digitales CGH (computergeneriertes Hologramm) verwendet und kann beliebige Objekte darstellen. Bei Verwendung des Phasenmodulators als Bildgeber entfällt die Streuscheibe für die Zwischenbilderzeugung. Das von dem Phasenmodulator erzeugte holographische Objekt wird direkt von dem Volumenhologramm abgebildet und je nach Auslegung als virtuelles, reelles oder image-plan (in der Ebene des Volumenhologramms) Objekt dargestellt.

Die beschriebenen Varianten für die Bilderzeugung (statisch, variabel mit 2D-Bildgeber, variabel mit 3D-Bildgeber = Phasenmodulator) können nicht nur für Rücklichter in der Automobilindustrie Anwendung finden, sondern auch bei anderen Fahrzeugleuchten, z.B. Bremslichtern oder Blinkern.

Der Vorteil der beschriebenen Anordnungen gegenüber holographischen Projektionssystemen mit Reflexionshologrammen besteht darin, dass sich der Bildgeber hinter dem Hologramm befindet.

Nichtdestotrotz können die beschriebenen Bildgeberanordnungen auch für Reflexionshologramme eingesetzt werden (z.B. holographische Head-up-Displays). Die beschriebenen Anordnungen nutzen die Fläche des Volumenhologramms als transparente Displayeinheit. Bei Verwendung von schmalbandigen Quellen (z.B. RGB-Laserprojektor) und der Auslegung der holografischen Schicht für 2 oder mehr Wellenlängen lassen sich polychromatische transparente Displays herstellen.

Als holographische Schicht (Aufnahmemedium) können alle Materialen verwendet werden, deren Brechungsindex sich lokal ändern lässt. In Frage kommen Photopolymer, Kunststoffe (PQ-doped PMMA, photorefraktive Gläser, etc.). Der Vorteil von Photopolymeren besteht darin, dass sie sich als Folien direkt auf die Außenlichtscheibe der Rückleuchte eines Autos laminieren lassen.

Wie bereits erläutert wurden oben stehend zwar Rückleuchten als Beispiele für Leuchteinrichtungen für Fahrzeuge verwendet, die dargestellten Techniken lassen sich aber auch auf andere Leuchteinrichtungen wie beispielsweise Blinker oder Bremsleuchten anwenden. Während beispielsweise in der Fig. 3 ein Transmissionshologramm 34 verwendet wird, können bei anderen Ausführungsbeispielen auch Reflexionshologramme wie unter Bezugnahme auf die Fig. 2 erläutert zum Einsatz kommen.

Die Nutzung von Reflexionshologrammen ist bei manchen Anwendungen im Automotive-Bereich jedoch erschwert, da sich bei Verwendung eines Reflexionshologramms die Lichtquelle grundsätzlich im selben Halbraum befinden muss wie der Beobachter (d.h. auf der gleichen Seite des Holgramms wie der Betrachter), wie dies in Fig. 2 dargestellt ist. Für eine Rückleuchte bei, der sich das Hologramm in einer Außenlichtscheibe der Rückleuchte befindet, müsste sich damit die Lichtquelle außerhalb des Autos befinden. Reflexionshologramme haben aber den Vorteil, dass sie eine größere Winkelakzeptanz als Transmissionshologramme besitzen und gleichzeitig die Wellenlänge viel stärker filtern als Transmissionshologramme. Bei der Verwendung von Reflexionshologrammen müsste die Wellenlänge der Lichtquelle nicht durch zusätzliche Maßnahmen eingeschränkt werden.

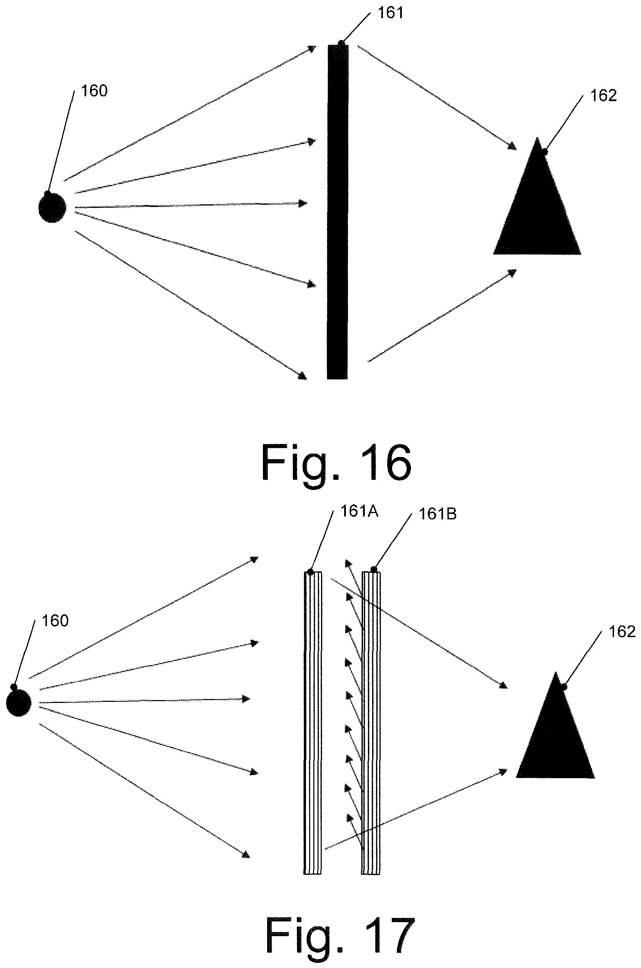

Diesbezüglich wird eine Leuchteinrichtung wie in Fig.16 dargestellt bereitgestellt. Die Leuchteinrichtung umfasst eine Punktlichtquelle 160, z.B. eine Leuchtdiode, auf einer Seite eines Hologrammstapels (Hologrammstack) 161 (in der Fig. 16 auf der linken Seite dargestellt). Bei dem Einsatz als Fahrzeugleuchte befindet sich die Lichtquelle 160 im inneren des Fahrzeugs, und der Hologrammstapel 161 kann an einer Außenseite des Fahrzeugs angebracht sein, z.B. in oder an einer Außenlichtscheibe. Die Anordnung der Punktlichtquelle 160 symmetrisch zu dem Hologrammstapel 161 ist nicht notwendig, auch eine Off-axis-Anordnung ist möglich. Der Hologrammstapel 161 umfasst zwei oder mehr Hologramme, von denen mindestens ein Hologramm ein Reflexionshologramm ist und der insbesondere zwei Reflexionshologramme umfasst. Ein Beispiel hierfür wird weiter unten unter Bezugnahme auf die Fig. 17 erläutert.

Der Hologrammstapel 161 erzeugt ein reelles Bild 162 auf der der Lichtquelle 160 gegenüberliegenden Seite des Hologrammstapels 161, in der Darstellung der Fig. 16 auf der rechten Seite. Dieses reelle Bild 162 kann sich bei einem Einsatz als Leuchteinrichtung in einem Fahrzeug insbesondere außerhalb des Fahrzeugs befinden.. Idee ist es, dass statt eines Einzelhologramms ein Hologrammstack verwendet wird. Durch die Verwendung eines Hologrammstapels mit einem oder mehreren Reflexionshologrammen ist es möglich, die beschriebenen positiven Eigenschaften von Reflexionshologrammen(Farbfilterung, große Winkelakzeptanz) für eine Transmissionsanordnung wie in Fig. 16 gezeigt ausnutzen.

Ein Beispiel für einen Hologrammstapel mit einem ersten Reflexionshologramm 161A und einem zweiten Reflexionshologramm 161B ist in Fig. 17 dargestellt. Ansonsten entspricht der Aufbau der Fig. 17 demjenigen der Fig. 16.

In Fig. 17 passiert das Licht der Lichtquelle 160 passiert das erste Reflexionshologramm 161A ungehindert. Das zweite Reflexionshologramm 161B ist in diesem Fall ein Punkt-zu-Ebenen-Hologramm und reflektiert das Licht der Punktlichtquelle 160 z.B. im Wesentlichen als ebene Welle zurück in den Halbraum der Punktlichtquelle 160 unter einem bestimmten Winkel, der insbesondere im Akzeptanzwinkelbereich des ersten Reflexionshologramms 161A liegt. Das ersten Reflexionshologramms 161A in Fig.17 beugt das Licht unter zurück in Richtung des zweiten Reflexionshologramms 161B. Dies geschieht unter einem Winkel, der so gewählt ist, dass das zweite Reflexionshologramms 161B das Licht zumindest im Wesentlichen ungehindert passieren lässt, um das reelle Bild 162 zu erzeugen.

Letztlich erreicht das Licht kommend von der Lichtquelle 160 durch die Filterung und Beugung an den Reflexionshologrammen 161A und 161B den der Lichtquelle 160 gegenüberliegenden Halbraum (in Fig. 17 auf der rechten Seite). Die letztlich sichtbare optische Hologrammfunktion, wird in dieser Anordnung von dem ersten Reflexionshologramm 161A erzeugt, d.h. dieses bestimmt das Aussehen des reellen Bildes 162.

Wie aus den obigen Erklärungen ersichtlich, sind verschiedene Variationen und Abwandlungen möglich. Daher sind die dargestellten Ausführungsbeispiele nicht als einschränkend auszulegen, wobei der Umfang der beanspruchten Erfindung durch die angehängten Ansprüche definiert ist.

## Patentansprüche

1. Leuchteinrichtung (31) für ein Fahrzeug, umfassend:
ein Hologramm (12; 20; 34; 70; 80; 90; 161), und
eine Lichtquelle (10; 32) zum Beleuchten des Hologramms (12; 20; 34; 70; 80), sodass durch das Hologramm (12; 20; 34; 70; 80) ein Bild (35; 71A-71E; 81; 162) erzeugt wird,
wobei das Hologramm (70) eine Vielzahl von Einzelhologrammen umfasst, sodass das Bild (71A-71E) eine Vielzahl von gleichzeitig erzeugten Einzelbildern umfasst, wobei die Einzelbilder verschiedene räumliche Ausrichtungen und gleiche Formen aufweisen, oder
wobei das Hologramm (80) eingerichtet ist, das Bild (81) mit einer gekrümmten Form zu erzeugen,
wobei die Vielzahl von Einzelhologrammen oder die gekrümmte Form eingerichtet ist, eine Betrachtbarkeit des Bildes in einer Ebene aus einem Winkelbereich größer als 45°, zu ermöglichen.

2. Leuchteinrichtung (31) nach Anspruch 1, wobei das Bild (35; 71A-71E; 81) ein reelles Bild ist.

3. Leuchteinrichtung (31) nach Anspruch 1 oder 2, wobei das Bild (35; 71A-71E; 81) eine Abmessung (61) kleiner als eine Abmessung (52) des Hologramms (12; 20; 34; 70; 80) aufweist.

4. Leuchteinrichtung nach einem der Ansprüche 1-3, wobei das Hologramm (12; 20; 34; 70; 80) eingerichtet ist, das Bild (35; 71A-71E; 81) außerhalb physikalischer Grenzen der Leuchteinrichtung (31) zu erzeugen.

5. Leuchteinrichtung nach Anspruch 4, wobei ein Abstand (36) zwischen der Leuchteinrichtung (31) und dem Bild (35; 71A-71E; 81) zwischen 50 und 200 mm liegt.

6. Leuchteinrichtung nach einem der Ansprüche 1-5, wobei die gekrümmte Form einem Ausschnitt eines Zylindermantels oder einem Ausschnitt einer Kugeloberfläche entspricht.

7. Leuchteinrichtung nach einem der Ansprüche 1-6, wobei der Winkelbereich größer als 90° ist.

8. Leuchteinrichtung nach einem der Ansprüche 1-6, wobei das Hologramm (12; 20; 34; 70; 80) eine Farbfilterfunktion für die Lichtquelle (10; 32) bereitstellt.

9. Leuchteinrichtung nach einem der Ansprüche 1-8, wobei die Leuchteinrichtung eine Rückleuchte für ein Kraftfahrzeug ist.

10. Leuchteinrichtung nach einem der Ansprüche 1-9, wobei die Lichtquelle (10; 32) eine Leuchtdiode umfasst.

11. Leuchteinrichtung nach einem der Ansprüche 1-10, wobei die Lichtquelle eine erste Lichtquelle (91) und eine zweite Lichtquelle (92) umfasst, wobei das Hologramm (90) eingerichtet ist, bei Beleuchtung durch die erste Lichtquelle (91) ein anderes Bild darzustellen als bei Beleuchtung durch die zweite Lichtquelle (92).

12. Leichteinrichtung nach Anspruch 11, wobei das Hologramm (90) mehrere gestapelte Einzelhologramme und/oder eine holographische Schicht mit mehreren holographischen Funktionen umfasst.

13. Leuchteinrichtung nach einem der Ansprüche 1-12, weiter umfassend einen mit der Lichtquelle gekoppelten Bildgeber (130; 140; 150) und eine Streuscheibe (131; 141; 151) zum Beleuchten des Hologramms mit variablen Bildinhalten.

14. Leuchteinrichtung nach einem der Ansprüche 1-13, wobei das Hologramm (161) einen Hologrammstapel mit mehreren gestapelten Einzelhologrammen umfassend mindestens ein Reflexionshologramm (161A, 161B) umfasst, wobei der Hologrammstapel eingerichtet ist, das Bild (162) auf einer der Lichtquelle (160) abgewandten Seite des Hologrammstapels zu erzeugen.

## Claims

1. Lighting device (31) for a vehicle, comprising:
a hologram (12; 20; 34; 70; 80; 90; 161), and
a light source (10; 32) for illuminating the hologram (12; 20; 34; 70; 80), such that an image (35; 71A-71E; 81; 162) is generated by the hologram (12; 20; 34; 70; 80), wherein the hologram (70) comprises a multiplicity of individual holograms, such that the image (71A-71E) comprises a multiplicity of simultaneously generated individual images, wherein the individual images have different spatial orientations and identical shapes, or wherein the hologram (80) is configured to generate the image (81) with a curved shape,
wherein the multiplicity of individual holograms or the curved shape is configured to enable a viewability of the image in a plane from an angular range greater than 45°.

2. Lighting device (31) according to Claim 1, wherein the image (35; 71A-71E; 81) is a real image.

3. Lighting device (31) according to Claim 1 or 2, wherein the image (35; 71A-71E; 81) has a dimensioning (61) smaller than a dimensioning (52) of the hologram (12; 20; 34; 70; 80).

4. Lighting device according to any of Claims 1-3, wherein the hologram (12; 20; 34; 70; 80) is configured to generate the image (35; 71A-71E; 81) outside physical boundaries of the lighting device (31).

5. Lighting device according to Claim 4, wherein a distance (36) between the lighting device (31) and the image (35; 71A-71E; 81) is between 50 and 200 mm.

6. Lighting device according to any of Claims 1-5, wherein the curved shape corresponds to a segment of a lateral surface of a cylinder or to a segment of a spherical surface.

7. Lighting device according to any of Claims 1-6, wherein the angular range is greater than 90°.

8. Lighting device according to any of Claims 1-6, wherein the hologram (12; 20; 34; 70; 80) provides a colour filter function for the light source (10; 32).

9. Lighting device according to any of Claims 1-8, wherein the lighting device is a rear luminaire for a motor vehicle.

10. Lighting device according to any of Claims 1-9, wherein the light source (10; 32) comprises a light emitting diode.

11. Lighting device according to any of Claims 1-10, wherein the light source comprises a first light source (91) and a second light source (92), wherein the hologram (90) is configured to represent a different image upon illumination by the first light source (91) than upon illumination by the second light source (92).

12. Lighting device according to Claim 11, wherein the hologram (90) comprises a plurality of stacked individual holograms and/or a holographic layer having a plurality of holographic functions.

13. Lighting device according to any of Claims 1-12, further comprising an image generator (130; 140; 150), which is coupled to the light source, and a diffusing plate (131; 141; 151) for illuminating the hologram with variable image contents.

14. Lighting device according to any of Claims 1-13, wherein the hologram (161) comprises a hologram stack having a plurality of stacked individual holograms comprising at least one reflection hologram (161A, 161B), wherein the hologram stack is configured to generate the image (162) on a side of the hologram stack facing away from the light source (160).

## Revendications

1. Dispositif d'éclairage (31) pour un véhicule, comprenant :
un hologramme (12 ; 20 ; 34 ; 70 ; 80 ; 90 ; 161), et
une source lumineuse (10 ; 32) destinée à éclairer l'hologramme (12 ; 20 ; 34 ; 70 ; 80), de sorte qu'une image (35 ; 71A-71E ; 81 ; 162) est générée par l'hologramme (12 ; 20 ; 34 ; 70 ; 80), l'hologramme (70) comprenant une pluralité d'hologrammes individuels, de sorte que l'image (71A-71E) comprend une pluralité d'images individuelles générées simultanément, les images individuelles présentant des orientations spatiales différentes et des formes identiques, ou
l'hologramme (80) étant conçu pour générer l'image (81) avec une forme incurvée,
la pluralité d'hologrammes individuels ou la forme incurvée étant conçue pour permettre une visibilité de l'image dans un plan depuis une plage angulaire supérieure à 45°.

2. Dispositif d'éclairage (31) selon la revendication 1, dans lequel l'image (35 ; 71A-71E ; 81) est une image réelle.

3. Dispositif d'éclairage (31) selon la revendication 1 ou 2, dans lequel l'image (35 ; 71A-71E ; 81) présente une dimension (61) inférieure à une dimension (52) de l'hologramme (12 ; 20 ; 34 ; 70 ; 80).

4. Dispositif d'éclairage selon l'une des revendications 1-3, dans lequel l'hologramme (12 ; 20 ; 34 ; 70 ; 80) est conçu pour générer l'image (35 ; 71A-71E ; 81) en dehors des limites physiques du dispositif d'éclairage (31).

5. Dispositif d'éclairage selon la revendication 4, dans lequel une distance (36) entre le dispositif d'éclairage (31) et l'image (35 ; 71A-71E ; 81) se situe entre 50 et 200 mm.

6. Dispositif d'éclairage selon l'une des revendications 1-5, dans lequel la forme incurvée correspond à une coupe d'une surface latérale de cylindre ou à une coupe d'une surface de sphère.

7. Dispositif d'éclairage selon l'une des revendications 1-6, dans lequel la plage angulaire est supérieure à 90°.

8. Dispositif d'éclairage selon l'une des revendications 1-6, dans lequel l'hologramme (12 ; 20 ; 34 ; 70 ; 80) fournit une fonction de filtre coloré pour la source lumineuse (10 ; 32).

9. Dispositif d'éclairage selon l'une des revendications 1-8, dans lequel le dispositif d'éclairage est un feu arrière pour un véhicule à moteur.

10. Dispositif d'éclairage selon l'une des revendications 1-9, dans lequel la source lumineuse (10 ; 32) comprend une diode électroluminescente.

11. Dispositif d'éclairage selon l'une des revendications 1-10, dans lequel la source lumineuse comprend une première source lumineuse (91) et une seconde source lumineuse (92), l'hologramme (90) étant conçu, lorsqu'il est éclairé par la première source lumineuse (91), pour afficher une image différente de celle affichée lorsqu'il est éclairé par la seconde source lumineuse (92).

12. Dispositif d'éclairage selon la revendication 11, dans lequel l'hologramme (90) comprend plusieurs hologrammes individuels empilés et/ou une couche holographique présentant plusieurs fonctions holographiques.

13. Dispositif d'éclairage selon l'une des revendications 1-12, comprenant en outre un générateur d'images (130 ; 140 ; 150) couplé à la source lumineuse et une lentille diffusante (131 ; 141 ; 151) destinée à éclairer l'hologramme avec des contenus d'image variables.

14. Dispositif d'éclairage selon l'une des revendications 1-13, dans lequel l'hologramme (161) comprend un empilement d'hologrammes constitué de plusieurs hologrammes individuels empilés comprenant au moins un hologramme de réflexion (161A, 161B), l'empilement d'hologrammes étant conçu pour générer l'image (162) sur un côté de l'empilement d'hologrammes qui est opposé à la source lumineuse (160).
